# EUROPEAN PATENT APPLICATION

(11) **EP 1 241 515 A2**
(43) Date of publication of application: **18.09.2002**
(21) Application number: 02005605.7
(22) Date of filing: 12.03.2002
(51) Int. Cl.: G02F 1/313

(54) **Optical switches and variable optical attenuators with known electrical-power-failure state**

(30) Priority: 12.03.2001 US 274968 P; 31.05.2001 US 294941 P; 11.03.2002 US 94694 P
(71) Applicant: Telephotonics, Inc., Wilmington, Massachusetts 01887 (US)
(72) Inventor: Eldada, Louay A., Lexington, MA 02421 (US)
(74) Representative: Hammond, Andrew David

(57) **Abstract**

The invention is generally directed to integrated optical devices, such as switches and variable optical attenuators. A solid-state actuation mechanism (e.g., heat) is used to switch, attenuate, and/or trim the devices. The devices have a known state in the case of electrical power failure. Some disclosed designs direct optical signals out an output port of the device in the absence of power, while the other designs direct optical signals out a separate exhaust port in the absence of power.

## Description

### PRIORITY INFORMATION

This application claims priority from provisional application Ser. No. 60/294,941 filed May 31, 2001.

### BACKGROUND OF THE INVENTION

The invention relates to the field of optical components.

One method of increasing the transportable bandwidth in optical communications networks is a technique known as wavelength division multiplexing (WDM). WDM is a technology that combines two or more wavelengths of light for transmission along a single optical waveguide. Each wavelength represents a channel that can carry a bit stream, i.e. content. Transporting two or more wavelengths on a waveguide effectively increases the aggregate bandwidth of the waveguide. For example, if 40 wavelengths, each capable of 10 Gb/s are used on a single fiber, the aggregate bandwidth of the fiber becomes 400 Gb/s.

A similar manner of increasing transportable bandwidth has been termed dense wavelength division multiplexing (DWDM). DWDM generally involves combining a denser number of wavelengths onto a fiber than WDM. While DWDM deals with more difficult issues associated with multiplexing a larger number of wavelengths on a fiber, such as cross-talk and non-linear effects, WDM and DWDM are typically used interchangeably.

Optical space switches and variable optical attenuators (VOA) based on planar lightwave circuit (PLC) technology are becoming important optical components in optical networks such as WDM networks. Optical switches switch optical signals from one optical waveguide to another, while VOAs attenuate the intensity of the optical signal in an optical waveguide.

Optical switches and VOAs typically require power in order to be in a specific state. Mechanically actuated switches and attenuators, e.g. based on moving fibers or MicroElectroMechanical Systems (MEMS), can maintain their state upon loss of power because they can be latching.

In contrast to mechanically actuated switches and attenuators, latching is not practical in solid-state optical switches or VOA components. Solid-state switches or VOA components are made as planar layers of a material, e.g. silica glass or polymer-based, on a silicon wafer or similar substrate. Thermo-optic, electro-optic, magneto-optic, or stress-optic effects, or any combination thereof, are typically used to actuate the device. Electrical power is typically used to operate the components implementing these effects for actuation. Latching is not practical in typical solid-state switches or VOAs because no mechanical motion occurs during actuation. Some possibilities do exist to introduce latching in solid state switches or VOAs, such as poling of polymer molecules, which is a process that consists of changing the molecule orientation by applying a large voltage (e.g., 1000 Volts). The change in orientation remains in effect after the voltage is turned off. Yet, such approaches are not practical and are not used in optical communication components. There is a need, therefore, for solid-state switches and VOAs in which the state is known upon power failure (i.e., where an optical signal is directed), even if the state is independent of the pre-failure state.

### SUMMARY OF THE INVENTION

In one aspect, the present invention provides an optical device comprising an optical component and at least a first bypass path. The optical component has at least a first input port to receive at least a first optical signal. A portion of the first bypass path is formed near the first input port to create a first coupler. The first coupler is designed and fabricated to provide essentially 100% coupling of the first optical signal to the first bypass path in the absence of power such that the first bypass path routes the optical signal around the optical component to a known location.

Another aspect of the present invention provides an optical device comprising an interferometric switching component having at least a first input port to receive at least a first optical signal and first and second output ports. The first optical signal is output to either the first output port or the second output port depending on the state of an actuation mechanism coupled to the switching component. The switching component is designed and fabricated so that essentially 100% of the first optical signal is output the first output port in the absence of power to the actuation mechanism.

### BRIEF DESCRIPTION OF THE DRAWINGS

Figures 1a-b and 2a-c illustrate embodiments, according to the present invention, of optical space switches and VOAs, respectively, in which a bypass path is used to route an input optical signal to a specified output port in the absence of any actuation;
Figures 3a-6b illustrate specific embodiments of the switching or attenuating components to achieve the functions as described with respect to figures 1a-b and 2a-c;
Figures 7a-b generally illustrate embodiments of optical space switches, according to the present invention, that use interferometric switching components in which the interferometric switching components are designed and fabricated to route an input optical signal to a specified output port in the absence of any actuation;
Figures 8-11 illustrate specific embodiments of the switching or attenuating components to achieve the functions as described with respect to figures 7a and 7b;
Figures 12a-b and 13a-c illustrate embodiments, according to the present invention, of optical space switches and VOAs, respectively, in which a bypass path is used as an exhaust port to output an input optical signal in the absence of any actuation; and
Figures 14a-17b illustrate specific embodiments of the switching or attenuating components to achieve the functions as described with respect to figures 12a-b and 13a-c.

### DETAILED DESCRIPTION OF THE INVENTION

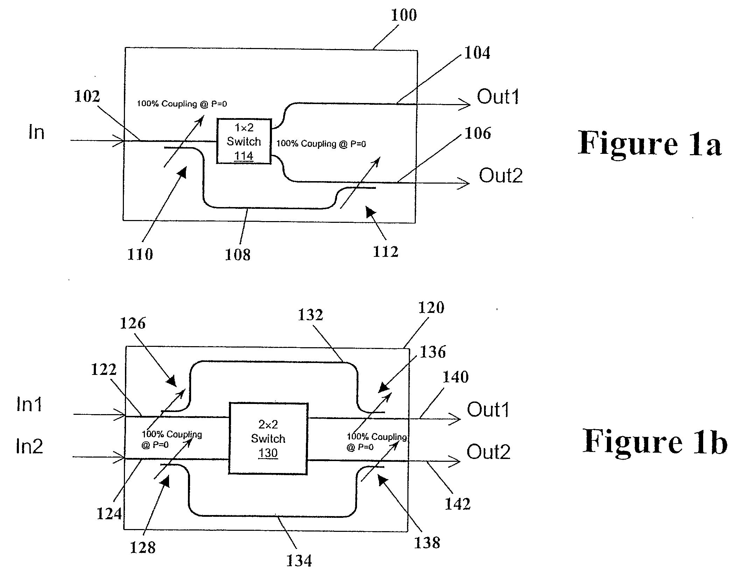

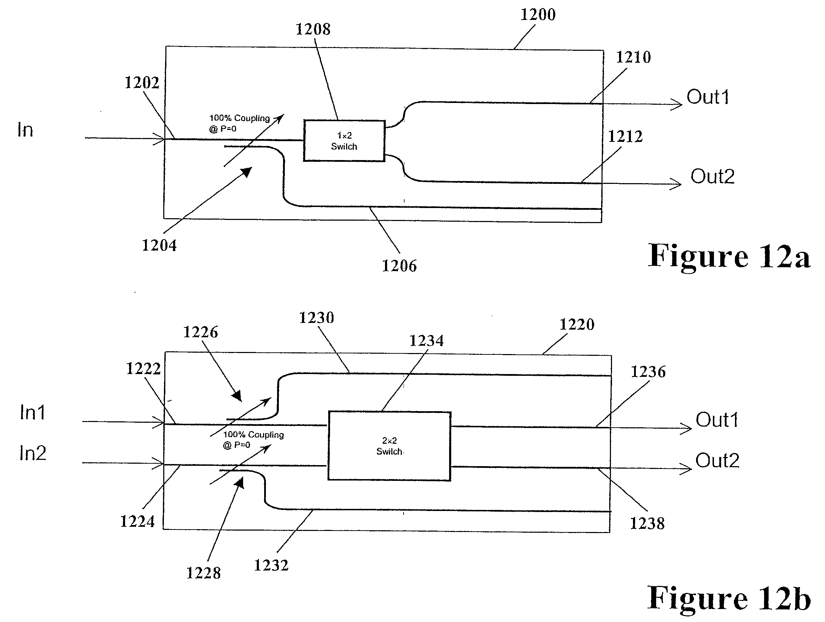

As described above, it is desirable to know the state of optical devices, such as optical space switches and VOAs, in the absence of actuation due to an electrical power failure. The present invention provides optical space switches and VOAs that are designed and fabricated to have a known state by directing optical signals to a known location in the absence of any actuation. That location can be an output port of the device, as illustrated in the embodiments of figures 1-11, or a separate exhaust port, as illustrated in the embodiments of figures 12-17.

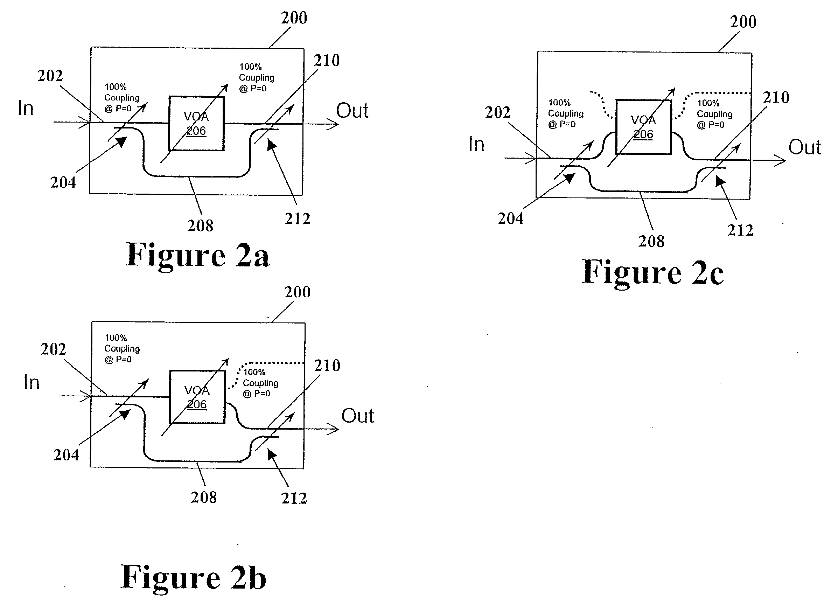

Figures 1a-b and 2a-c illustrate embodiments of optical space switches and VOAs, respectively, in which a bypass path is used to route an input optical signal around the optical component to a specified output port in the absence of any actuation (i.e., when there is no electrical power).

Figure 1a generally illustrates an embodiment of a 1×2 optical space switch in which an input optical signal bypasses the switching component of the device and goes straight to an output port in the absence of electrical power. As shown, a 1×2 switching component **114** is formed on a substrate **100,** including an actuation mechanism. Switching component **114** has an input port **102** that receives an optical signal, a first output port **104** that outputs the received optical signal when the actuation mechanism is actuated to place switching component **114** in a first state, and a second output port **106** that outputs the received optical signal when the actuation mechanism is actuated to place switching component **114** in a second state. Each port is formed as an optical waveguide fabricated on substrate **100.**

A bypass path **108** is also formed as an optical waveguide on substrate **100.** A portion of bypass path **108** is formed close to input port **102** to create a first coupler **110.** An actuation mechanism (illustrated by the arrow) is formed as part of coupler **110.** When electrical power is applied, the actuation mechanism causes coupler **110** to couple essentially 0% of the optical power received at input port 102 to bypass path 108. In the absence of power for the actuation mechanism, however, coupler **110** couples essentially 100% of the optical power received at input port **102** to bypass path **108.**

Similarly, a different portion of bypass path 108 is formed close to second output port **106** so as to create a second coupler **112.** An actuation mechanism (illustrated by the arrow) is also formed as part of coupler **112.** Coupler **112** is designed and fabricated such that, when electrical power is applied, the actuation mechanism causes coupler **112** to couple essentially 100% of the optical power on bypass path **108** to second output port **106.** In the absence of power for the actuation mechanism, however, coupler **110** couples essentially 0% of the optical power output at output port **102** to bypass path **108.**

Thus, when electrical power is applied and an optical signal is received at input port **102,** the optical signal is not coupled to bypass path **108** and switching component **114** operates as normal, outputting the optical signal to first output port **104** or second output port **106** depending on the state of switching component **114.** In the absence of electrical power, however, an optical signal received at input port **102** is coupled into bypass path **108** by coupler **110,** bypasses switching component **114,** and is coupled into second output port **106** by coupler **112.**

To couple essentially 100% of the received optical signal into and out of bypass path **108** in the absence of electrical power, couplers **110** and **112** are fabricated with precise and predictable coupling without the need for active trimming (i.e., without need to adjust the coupling ratio by applying electrical power). In a preferred embodiment, couplers **110** and **112** are directional couplers. Prior art directional couplers are not fabricated with precise and predictable coupling absent electrical power because of the difficulty in precisely patterning the gap between the waveguides in the coupling region. Rather, the coupling ratio is adjusted by applying a small bias to the actuation mechanism to couple optical signals out one of the outputs, while a lager bias is used to actuate the coupler to couple optical signals out the other output. In accordance with the present invention, however, the gap between the waveguides in the coupling region is precisely patterned by applying one of the following design rules:
1) The gap has an aspect ratio of at least 1:1 (i.e., the width is at least as large as the height); or
2) No gap exists (i.e., the two waveguides merge as an essentially double-width waveguide in the coupling region).
Therefore, one of the above design rules is used to design couplers **110** and **112.** Couplers **110** and **112** are then precisely fabricated on substrate **100** so that they do not require trimming to provide essentially 100% coupling in the absence of electrical power.

Figure 1b generally illustrates an embodiment of a 2×2 optical space switch in which input optical signals bypass the switching component of the device and go straight to an output port in the absence of electrical power. As shown, a 2×2 switching component **130** is formed on a substrate **120,** including an actuation mechanism. Switching component **130** has first and second input ports, **122** and **124** respectively, that receive optical signals. Switching component **130** also has first and second output ports **140** and **142** respectively, that output the received optical signals depending on the state of switching component **130.** When switching component **130** is actuated to be in a first state, the optical signal received by first input port **122** is output to second output port **142,** while the optical signal received on second input port **124** is output to first output port **140.** Conversely, when switching component **130** is actuated to be in a second state, the optical signal received by first input port **122** is output to first output port **140,** while the optical signal received on second input port **124** is output to second output port **142.** Each port is formed as an optical waveguide fabricated on substrate **100.**

A first bypass path **108** connecting first input **122** and first output **140** is also formed as an optical waveguide on substrate **100.** A portion of first bypass path **132** is formed close to first input port **122** to create a first coupler **126,** while a different portion of bypass path **132** is formed close to first output port **140** so as to create a second coupler **136.** Actuation mechanisms (illustrated by the arrow) are formed as part of couplers **126** and **136.**

Similarly, a second bypass path **134** connecting second input port **124** and second output port **142** is also formed as an optical waveguide on substrate **100.** A portion of second bypass path **134** is formed close to second input port **124** to create a third coupler **128,** while a different portion of bypass path **134** is formed close to second output port **142** so as to create a second coupler **138.** Actuation mechanisms (illustrated by the arrow) are formed as part of couplers **128** and **138.**

The couplers **126, 136, 128,** and **138** are designed and fabricated in the same manner as described with respect to figure 1a such that, in the absence of electrical power, the bypass paths **132** and **134** route optical signals around switching component **130.** Thus, when electrical power is applied and an optical signal is received at first input port **122,** the optical signal is not coupled to first bypass path **132** and switching component **130** operates as normal, outputting the optical signal to first output port **140** or second output port **142** depending on the state of switching component **130.** In the absence of electrical power, however, an optical signal received at first input port **122** is coupled into first bypass path **132** by coupler **126,** bypasses switching component **130,** and is coupled into first output port **140** by coupler **136.** Likewise, when electrical power is applied and an optical signal is received at second input port **124,** the optical signal is not coupled to second bypass path **134** and switching component **130** operates as normal, outputting the optical signal to first output port **140** or second output port **142** depending on the state of switching component **130.** In the absence of electrical power, however, an optical signal received at second input port **124** is coupled into second bypass path **134** by coupler **128,** bypasses switching component **130,** and is coupled into second output port **142** by coupler **138.**

Figure 2a-c generally illustrate embodiments of a VOA in which an input optical signal bypasses the attenuating component of the device and goes straight to an output port in the absence of electrical power. Figure 2a illustrates an embodiment in which the attenuating component is based on a 1×1 design. Figure 2b illustrates an embodiment in which the attenuating component is based on a 1×2 design. Figure 2c illustrates an embodiment in which the attenuating component is based on a 2×2 design.

In each embodiment, as shown, an attenuating component **206** is formed on a substrate **200.** Attenuating component **206** has an input port **202** that receives an optical signal and an output port **210** that outputs the received optical signal after it is attenuated by attenuating component **206.** Each port is formed as an optical waveguide fabricated on substrate **200.**

Similar to the embodiment of figure 1a, a bypass path **208** connecting input port **202** and output port **210** is also formed as an optical waveguide on substrate **200.** A portion of bypass path **208** is formed close to input port **202** to create a first coupler **204,** while a different portion of bypass path **208** is formed close to output port **210** so as to create a second coupler **212.** Actuation mechanisms (illustrated by the arrow) are formed as part of couplers **204** and **212.**

The couplers **204** and **212** are designed and fabricated in the same manner as described with respect to figure 1a, such that, in the absence of electrical power, bypass path **208** routes optical signals around attenuating component **206.** Thus, when electrical power is applied and an optical signal is received at input port **202,** the optical signal is not coupled to bypass path **208** and attenuating component **206** operates as normal, attenuating the optical signal and outputting the attenuated signal to output port **210.** In the absence of electrical power, however, an optical signal received at input port **202** is coupled into bypass path **208** by coupler **204,** bypasses attenuating component **206,** and is coupled into output port **210** by coupler **212.**

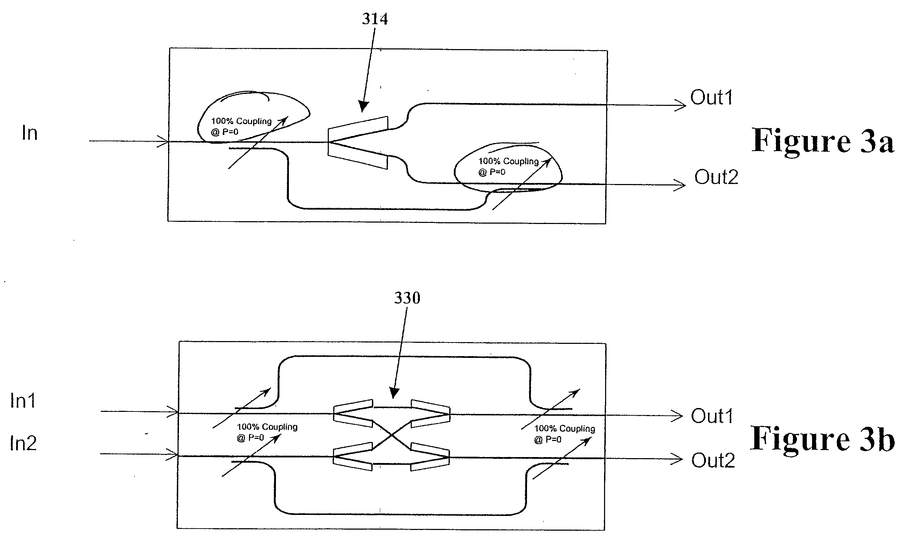

Figures 3a-6b illustrate specific embodiments of the switching or attenuating components to achieve the functions as described with respect to figures 1a-b and 2a-c.

Figure 3a illustrates an embodiment of the 1 x 2 designs of figures 1a and 2b in which the switching or attenuating component is based on a Y-branch switch 314. When used as a VOA, only one input and one output is used. Similarly, figure 3b illustrates an embodiment of the 2 x 2 designs of figures 1b and 2c in which the switching or attenuating component is based on a 2 x 2 DOS design 330. When used as a VOA, only one input and one output is used.

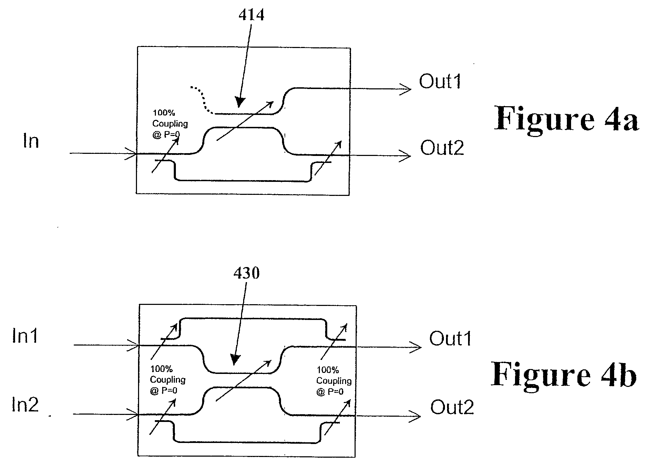

Figure 4a illustrates an embodiment of the 1 x 2 designs of figures 1a and 2b in which the switching or attenuating component is based on a 1 x 2 directional coupler **414.** When used as a VOA, only one input and one output is used. Similarly, figure 4b illustrates an embodiment of the 2 x 2 designs of figures 1b and 2c in which the switching or attenuating component is based on a 2 x 2 directional coupler 430. When used as a VOA, only one input and one output is used.

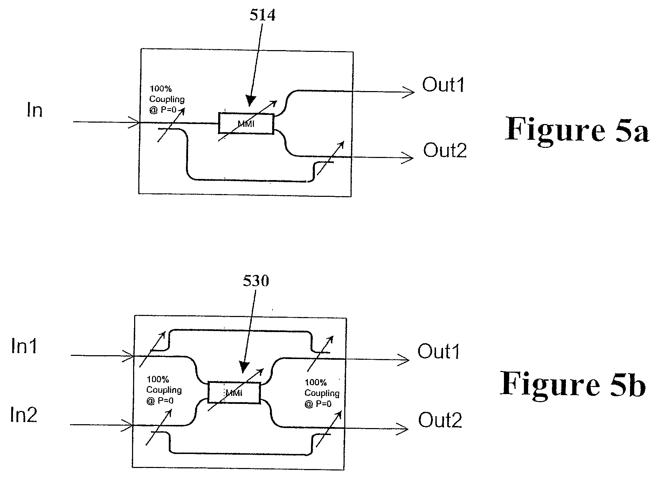

Figure 5a illustrates an embodiment of the 1 x 2 designs of figures 1a and 2b in which the switching or attenuating component is based on a 1 x 2 multi-mode interference (MMI) coupler **514.** When used as a VOA, only one input and one output is used. Similarly, figure 5b illustrates an embodiment of the 2 x 2 designs of figures 1b and 2c in which the switching or attenuating component is based on a 2 x 2 MMI coupler 530. When used as a VOA, only one input and one output is used.

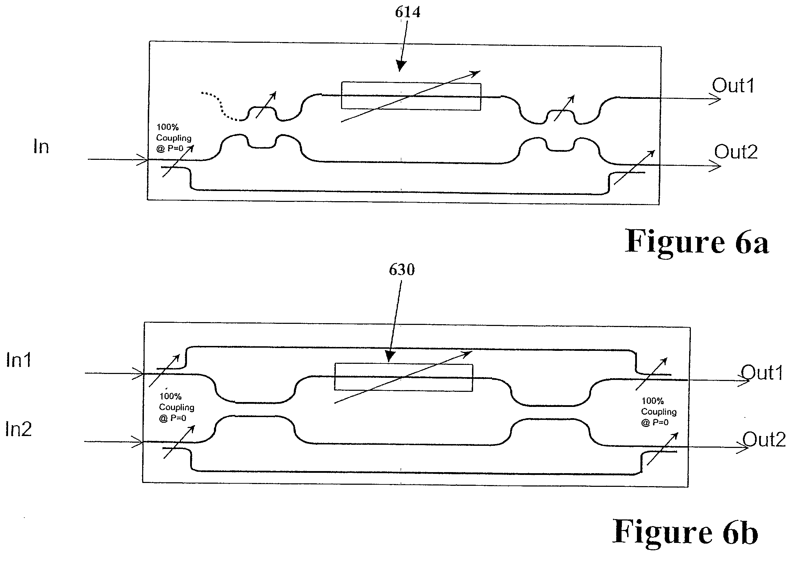

Figure 6a illustrates an embodiment of the 1 x 2 designs of figures 1a and 2b in which the switching or attenuating component is based on a 1 x 2 Mach-Zehnder Interferometer (MZI) **614.** When used as a VOA, only one input and one output is used. Similarly, figure 6b illustrates an embodiment of the 2 x 2 designs of figures 1b and 2c in which the switching or attenuating component is based on a 2 x 2 Mach-Zehnder Interferometer **630.** When used as a VOA, only one input and one output is used.

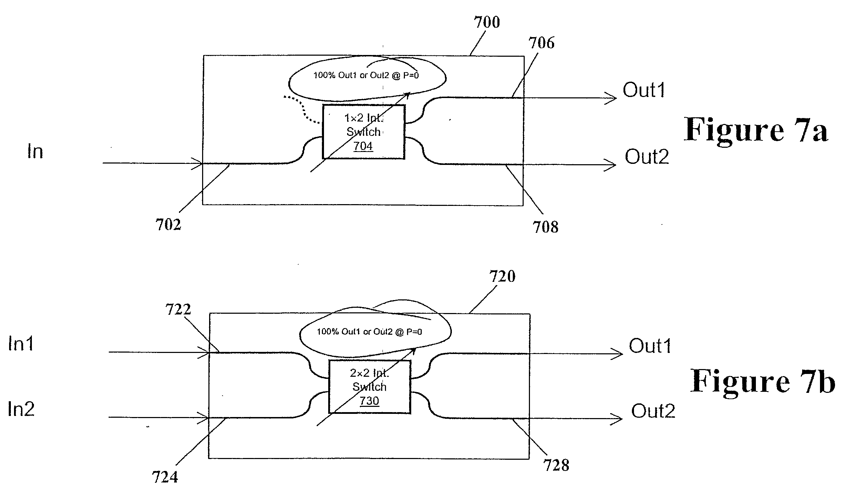

Figures 7a-b generally illustrate embodiments of optical space switches that use interferometric switching components in which the interferometric switching components are designed and fabricated to route an input optical signal to a specified output port in the absence of any actuation (i.e., when there is no electrical power).

Fig. 7a illustrates a switch in which a 1 x 2 interferometric switching component **704** is formed on substrate **700,** including an actuation mechanism coupled to switching component **704.** Switching component **704** has an input port **702** that receives an optical signal, a first output port **706** that outputs the received optical signal when the actuation mechanism is actuated to place switching component **704** in a first state, and a second output port **708** that outputs the received optical signal when the actuation mechanism is actuated to place switching component **704** in a second state. Each port is formed as an optical waveguide fabricated on substrate **700.** Switching component **704** is designed and fabricated such that, in the absence of electrical power, an input optical signal traversing the device is routed interferometrically to one output of the device.

Thus, when electrical power is applied and an optical signal is received at input port **702,** the optical signal is switched normally, i.e. to first output port **706** or second output port **708** depending on the actuation of switching component **704.** In the absence of electrical power, however, an optical signal received at input port **702** is routed by switching component **704** to, for example, first output port **706.**

Fig. 7b illustrates a switch in which a 2 x 2 interferometric switching component **730** is formed on substrate **720,** including an actuation mechanism coupled to switching component **704.** Switching component **730** has first and second input ports, **722** and **724** respectively, that receive optical signals. Switching component **730** also has first and second output ports, **726** and **728** respectively, that output the received optical signals depending on the state of switching component **730.** When the actuation mechanism is actuated to place switching component **730** in a first state, the optical signal received by first input port **722** is output to second output port **728,** while the optical signal received on second input port **724** is output to first output port **726.** Conversely, when the actuation mechanism is actuated to place switching component **730** in a second state, the optical signal received by first input port **722** is output to first output port **726,** while the optical signal received on second input port **724** is output to second output port **728**. Each port is formed as an optical waveguide fabricated on substrate **700.** Switching component **730** is designed and fabricated such that, in the absence of electrical power, an input optical signal received at first input port **722** and traversing the device is routed interferometrically to one output of the device, while an input optical signal received at second input port **724** and traversing the device is routed interferometrically to the other output of the device.

Thus, when electrical power is applied and an optical signal is received at first input port **722,** the optical signal is switched normally, i.e. to first output port **726** or second output port **728** depending on the actuation of switching component **730.** In the absence of electrical power, however, an optical signal received at first input port **722** is routed by switching component **730** to, for example, second output port **728.** Likewise, when electrical power is applied and an optical signal is received at second input port **724,** the optical signal is switched normally, i.e. to first output port **726** or second output port **728** depending on the actuation of switching component **730.** In the absence of electrical power, however, an optical signal received at second input port **724** is routed by switching component **730** to the other output port, for example, first output port **726.**

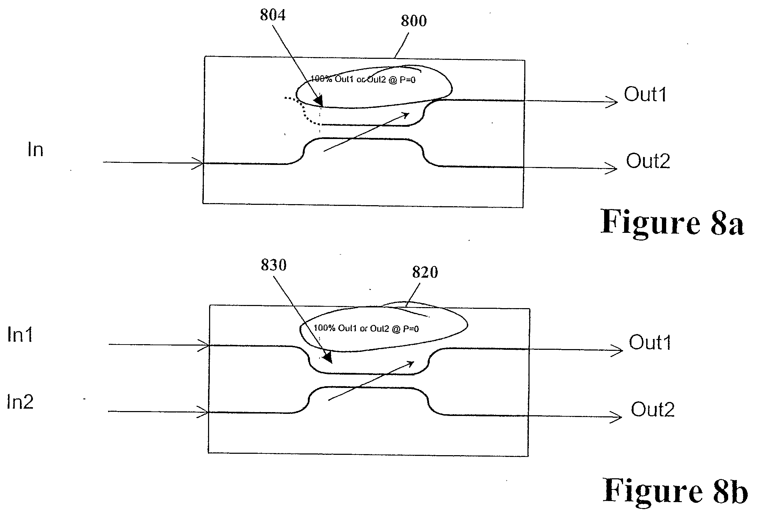

Figures 8-11 illustrate specific embodiments of the switching or attenuating components to achieve the functions as described with respect to figures 7a and 7b.

Figure 8a illustrates an embodiment of the 1 x 2 design of figure 7a in which the switching component is based on a 1 x 2 directional coupler **804** with an actuation mechanism formed therewith. To achieve the predictable routing of essentially 100% of a received optical signal to one of the output ports in the absence of electrical power, one of the design rules described above in relation to figure 1a is used to design coupler **804.** Coupler **804** is then precisely fabricated on substrate **800** so that it does not require trimming to provide essentially 100% coupling in the absence of electrical power. Similarly, figure 8b illustrates an embodiment of the 2 x 2 design of figure 7b in which the switching component is based on a 2 x 2 directional coupler **830** with an actuation mechanism formed therewith. One of the design rules described above in relation to figure 1a is also used to design and fabricate coupler **830** so as to achieve the predictable routing of essentially 100% of a received optical signal to one of the output ports in the absence of electrical power.

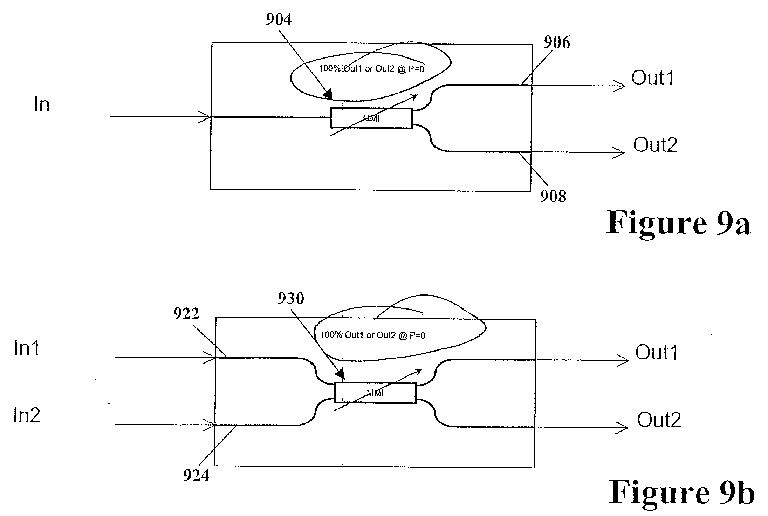

Figure 9a illustrates an embodiment of the 1 x 2 design of figure 7a in which the switching component is based on a 1 x 2 MMI coupler **904** with an actuation mechanism formed therewith. MMI couplers of the prior art suffer from similar disadvantages as directional couplers. Therefore, in accordance with the present invention, a design rule is followed in order to produce MMI couplers with precise and predictable coupling without the need to adjust the coupling ratio by applying electrical power. To obtain the predictable routing of essentially 100% of a received optical signal to one of the output ports in the absence of electrical power, the output waveguides, **906** and **908,** of MMI coupler **904** should have practically no evanescent coupling between them. This is achieved by designing the gap between them to have an aspect ratio of at least 2:1 (i.e., the gap width has to be at least twice as large as the height). When designed accordingly, the MMI can be fabricated to route essentially 100% of a received optical signal to one of the output ports in the absence of electrical power. Similarly, figure 9b illustrates an embodiment of the 2 x 2 design of figure 7b in which the switching component is based on a 2 x 2 MMI coupler 930 with an actuation mechanism formed therewith. The design rule described above in relation to figure 9a is also used to design and fabricate MMI coupler **930,** however, the input waveguides, **922** and **924,** should also have practically no evanescent coupling between them, which is achieved by designing the gap between them to have an aspect ratio of at least 2:1. By substantially eliminating the evanescent coupling, the predictable routing of essentially 100% of a received optical signal to one of the output ports in the absence of electrical power can be achieved.

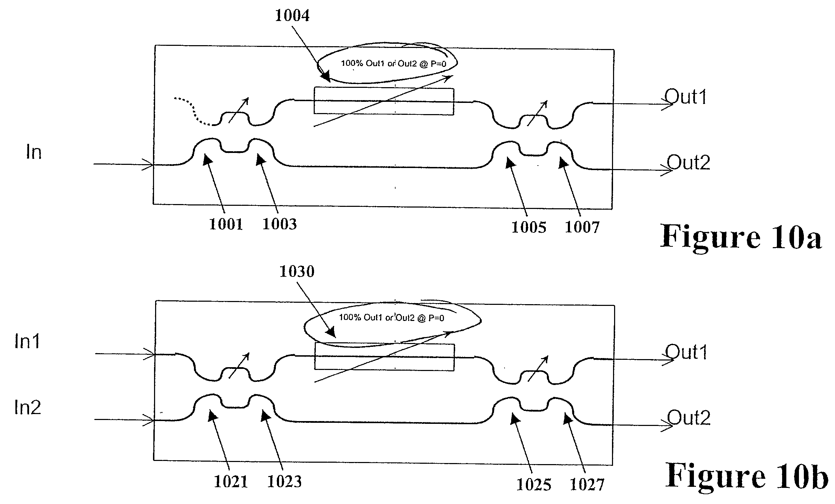

Figure 10a illustrates an embodiment of the 1 x 2 design of figure 7a in which the switching component is based on a 1 x 2 MZI 1004 with an actuation mechanism formed in one arm thereof. In order to obtain the predictable routing of essentially 100% of a received optical signal to one of the output ports in the absence of electrical power, the coupling regions, **1001** and **1003,** of the input 3dB coupler and the coupling regions, **1005** and **1007,** of the output 3dB coupler are designed and fabricated in the same manner as the directional couplers described in the embodiment of figure 1a. Similarly, figure 10b illustrates an embodiment of the 2 x 2 design of figure 7b in which the switching component is based on a 2 x 2 MMI coupler **1030** with an actuation mechanism formed in one arm thereof. As with MZI **1004,** the coupling regions, 1021 and **1023,** of the input 3dB coupler and the coupling regions, **1025** and **1027,** of the output 3dB coupler are also designed and fabricated in the same manner as the directional couplers described in the embodiment of figure 1a to obtain the predictable routing of essentially 100% of a received optical signal in the absence of electrical power.

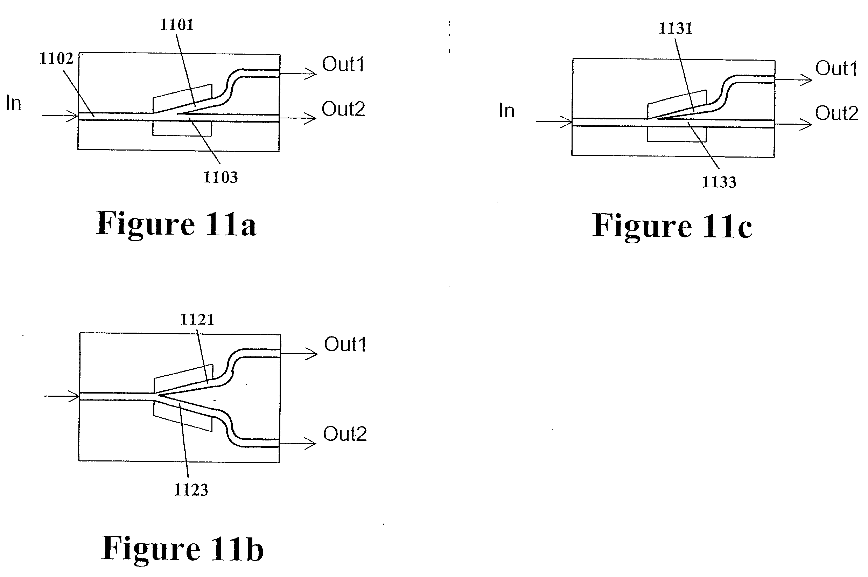

Figures 11a-c illustrate embodiments of the 1 x 2 design of figure 7a in which the switching component is a 1×2 DOS that is asymmetric by design such that, in the absence of electrical power, an input optical signal traversing the device is routed to one output of the device. One method of achieving such asymmetry is by having the angle of one arm of the Y-branch with respect to the input port be smaller than the angle of the other arm with respect to the input port. Figure 11a shows a particular embodiment of achieving the asymmetry this way. As shown, arm **1101** has a non-zero angle with respect to input port **1102,** while arm **1103** has a zero angle with respect to input port **1102.** Another method of achieving such asymmetry is by having the width of one arm be smaller than the width of the other arm. In two specific cases of this embodiment, one arm has a uniform width similar to that of the input and output waveguides and the other arm (i) starts with a smaller width and tapers out to essentially the width of the first arm; or (ii) has a uniformly thin width for some length and then tapers out to essentially the width of the first arm. Figure 11b illustrates the case in which first arm **1123** has a uniform width and second arm **1121** starts with a smaller width and tapers out to essentially the width of first arm **1123.** A third method of achieving such asymmetry is by having both the angle asymmetry of figure 11a and the width asymmetry of figure 11b. This is illustrated in figure 11c, which shows arm **1131** with a non-zero angle and tapered width, while arm **1133** has a zero angle and uniform width.

Figures 12a-b and 13a-c illustrate embodiments of optical space switches and VOAs, respectively, in which a bypass path routes an input optical signal around the optical component and is used as an exhaust port to output the input optical signal in the absence of any actuation (i.e., when there is no electrical power).

Figure 12a generally illustrates an embodiment of a 1×2 optical space switch in which, in the absence of electrical power, an input optical signal bypasses the switching component via a bypass path and is output by the bypass path. As shown, a 1×2 switching component **1208** is formed on a substrate **1200.** Switching component **1208** has an input port **1202** that receives an optical signal, a first output port **1210** that outputs the received optical signal when switching component **1208** is actuated to be in a first state, and a second output port **1212** that outputs the received optical signal when switching component **1208** is actuated to be in a second state. Each port is formed as an optical waveguide fabricated on substrate **1200.**

As with the embodiment of figure 1a, a bypass path **1206** is also formed as an optical waveguide on substrate **1200.** A portion of bypass path **1206** is formed close to input port **1202** to create a first coupler **1204.** An actuation mechanism (illustrated by the arrow) is formed as part of coupler **1204.** Instead of being formed into a second coupler as with the embodiment of figure 1a, bypass path **1206** is routed to the edge of substrate **1200** and acts as an exhaust port to output the optical signal.

The coupler **1204** is designed and fabricated, however, in the same manner as described with respect to figure 1a such that, in the absence of electrical power, the bypass path **1206** routes optical signals around switching component **1208.** Thus, when electrical power is applied and an optical signal is received at first input port **1202,** the optical signal is not coupled to bypass path **1206** and switching component **1208** operates as normal, outputting the optical signal to first output port **1210** or second output port **1212** depending on the state of switching component **1208.** In the absence of electrical power, however, an optical signal received at first input port **1202** is coupled into bypass path **1206,** which acts as an exhaust port to output the optical signal.

Figure 12b generally illustrates an embodiment of a 2×2 optical space switch in which, in the absence of electrical power, input optical signals bypass the switching component of the device via a respective bypass path and are output by the bypass path. As shown, a 2×2 switching component **1234** is formed on a substrate **1220.** Switching component **1234** has first and second input ports, **1222** and **1224** respectively, that receive optical signals. Switching component **1234** also has first and second output ports, **1236** and **1238** respectively, that output the received optical signals depending on the state of switching component **1234.** When switching component **1234** is actuated to be in a first state, the optical signal received by first input port **1222** is output to second output port **1238** while the optical signal received on second input port **1224** is output to first output port **1236.** Conversely, when switching component **1234** is actuated to be in a second state, the optical signal received by first input port **1222** is output to first output port **1240,** while the optical signal received on second input port **1224** is output to second output port **1236.** Each port is formed as an optical waveguide fabricated on substrate **1220.**

A first bypass path **1230** is also formed as an optical waveguide on substrate **1220.** A portion of first bypass path **1230** is formed close to first input port **1222** to create a first coupler **1226.** An actuation mechanism (illustrated by the arrow) is formed as part of coupler **1226.** Instead of being formed into a second coupler as with the embodiment of figure 1b, bypass path **1230** is routed to the edge of substrate **1200** and acts as an exhaust port to output the optical signal.

Similarly, a second bypass path **1232** is formed as an optical waveguide on substrate **1220.** A portion of second bypass path **1232** is formed close to second input port **1224** to create a second coupler **1228.** An actuation mechanism (illustrated by the arrow) is formed as part of coupler **1228.** Like bypass path 1230, bypass path **1232** is routed to the edge of substrate **1200** and acts as an exhaust port to output the optical signal.

The couplers **1226** and **1228** are designed and fabricated in the same manner as described with respect to figure 1a such that, in the absence of electrical power, the bypass paths **1230** and **1232** route optical signals around switching component **1234.** Thus, when electrical power is applied and an optical signal is received at first input port **1222,** the optical signal is not coupled to first bypass path **1230** and switching component **1234** operates as normal, outputting the optical signal to first output port **1236** or second output port **1238** depending on the state of switching component **1234.** In the absence of electrical power, however, an optical signal received at first input port **1222** is coupled into first bypass path **1230** by coupler **1226,** which acts as an exhaust port to output the optical signal. Likewise, when electrical power is applied and an optical signal is received at second input port **1224,** the optical signal is not coupled to second bypass path **1232** and switching component **1234** operates as normal, outputting the optical signal to first output port **1236** or second output port **1238** depending on the state of switching component **1234.** In the absence of electrical power, however, an optical signal received at second input port **1224** is coupled into second bypass path **1232** by coupler **1228,** which acts as an exhaust port to output the optical signal.

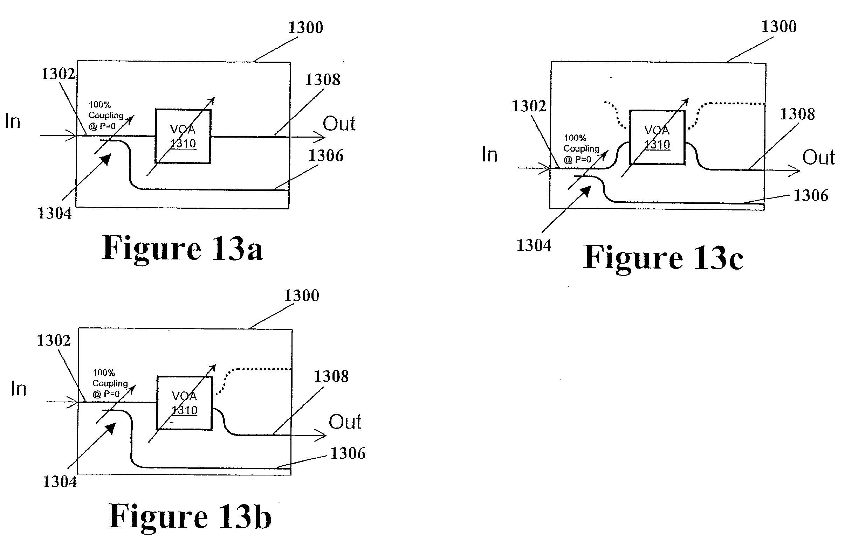

Figure 13a-c generally illustrate embodiments of a VOA in which, in the absence of electrical power, an input optical signal bypasses the attenuating component of the device via a bypass path, which acts as an exhaust port to output the optical signal. Figure 13a illustrates an embodiment in which the attenuating component is based on a 1×1 design. Figure 13b illustrates an embodiment in which the attenuating component is based on a 1×2 design. Figure 13c illustrates an embodiment in which the attenuating component is based on a 2×2 design.

In each embodiment, as shown, an attenuating component **1310** is formed on a substrate **1300.** Attenuating component **1310** has an input port **1302** that receives an optical signal and an output port **1308** that outputs the received optical signal after it is attenuated by attenuating component **1310.** Each port is formed as an optical waveguide fabricated on substrate **1300.**

Similar to the embodiment of figure 12a, a bypass path **1306** is also formed as an optical waveguide on substrate **1300.** A portion of bypass path **1306** is formed close to input port **1302** to create a coupler **1304.** An actuation mechanism (illustrated by the arrow) is formed as part of coupler **1304.**

Coupler **1304** is designed and fabricated in the same manner as described with respect to figure 1a, such that, in the absence of electrical power, bypass path **1304** routes optical signals around attenuating component **1310.** Thus, when electrical power is applied and an optical signal is received at input port **1302,** the optical signal is not coupled to bypass path **1306** and attenuating component **1310** operates as normal, attenuating the optical signal and outputting the attenuated signal to output port **1308.** In the absence of electrical power, however, an optical signal received at input port **1302** is coupled into bypass path **1306,** which outputs the optical signal.

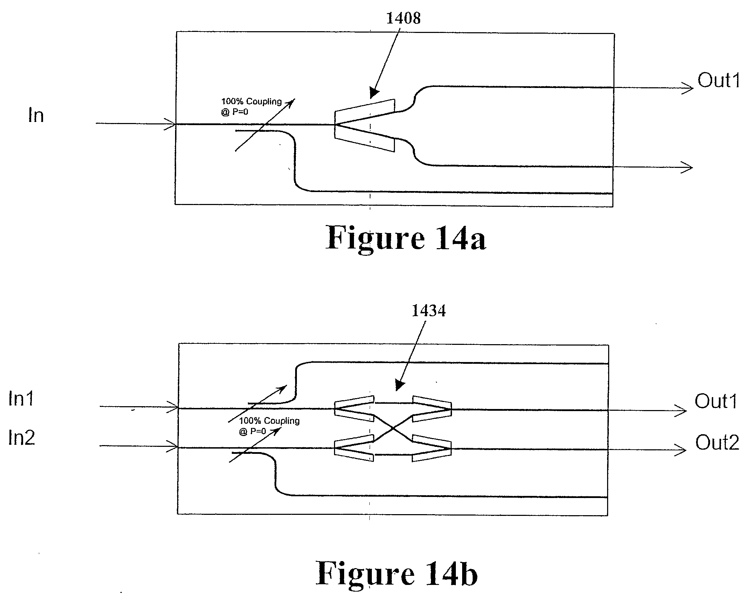

Figures 14a-17b illustrate specific embodiments of the switching or attenuating components to achieve the functions as described with respect to figures 12a-b and 13a-c.

Figure 14a illustrates an embodiment of the 1 x 2 designs of figures 12a and 13b in which the switching or attenuating component is based on a Y-branch switch **1408.** When used as a VOA, only one input and one output is used. Similarly, figure 14b illustrates an embodiment of the 2 x 2 designs of figures 12b and 13c in which the switching or attenuating component is based on a 2 x 2 DOS design **1434.** When used as a VOA, only one input and one output is used.

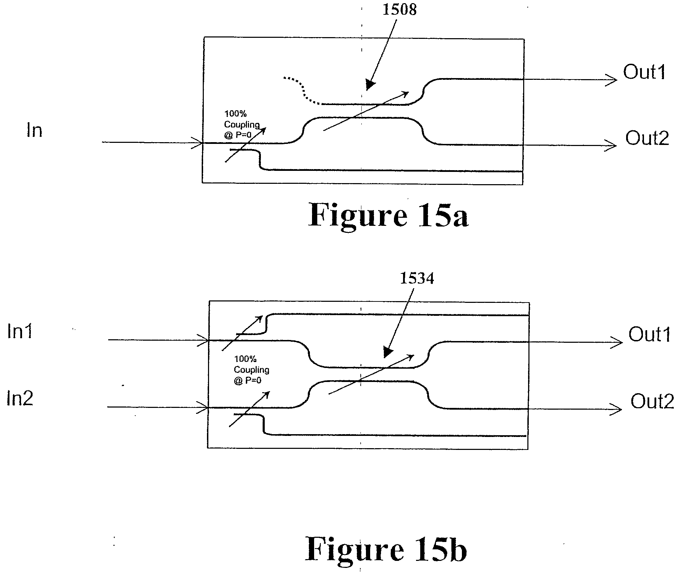

Figure 15a illustrates an embodiment of the 1 x 2 designs of figures 12a and 13b in which the switching or attenuating component is based on a 1 x 2 directional coupler **1508.** When used as a VOA, only one input and one output is used. Similarly, figure 15b illustrates an embodiment of the 2 x 2 designs of figures 12b and 13c in which the switching or attenuating component is based on a 2 x 2 directional coupler **1534.** When used as a VOA, only one input and one output is used.

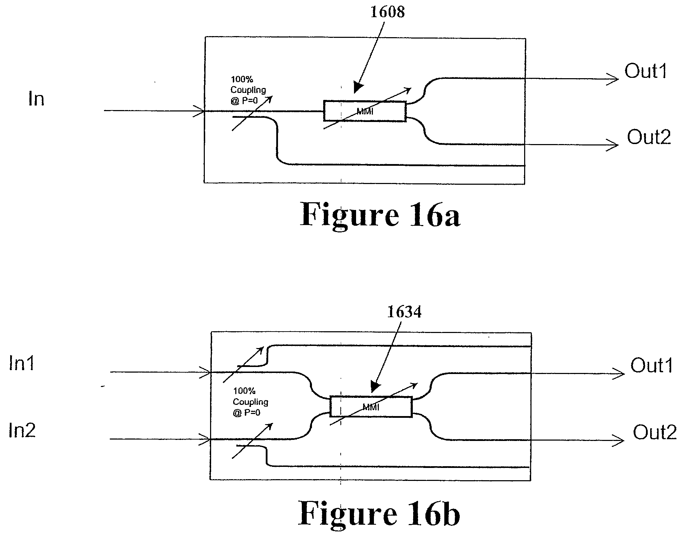

Figure 16a illustrates an embodiment of the 1 x 2 designs of figures 12a and 13b in which the switching or attenuating component is based on a 1 x 2 MMI coupler **1608.** When used as a VOA, only one input and one output is used. Similarly, figure 16b illustrates an embodiment of the 2 x 2 designs of figures 12b and 13c in which the switching or attenuating component is based on a 2 x 2 MMI coupler **1634.** When used as a VOA, only one input and one output is used.

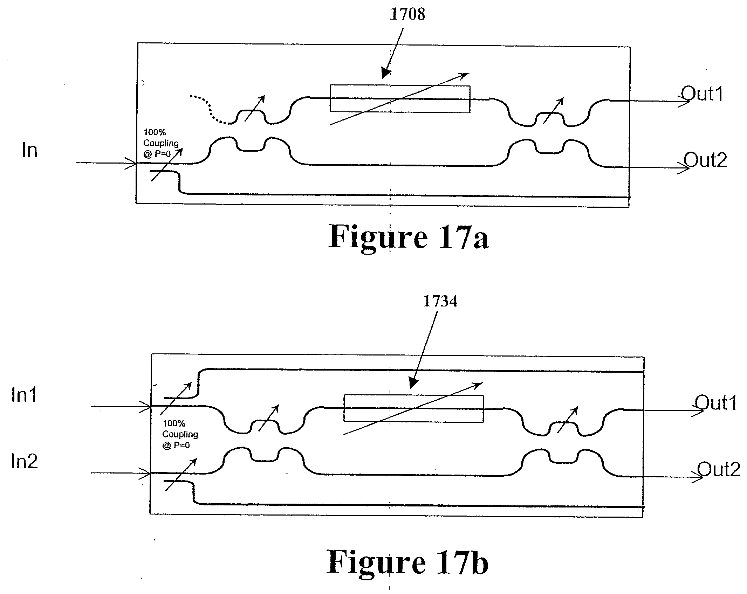

Figure 17a illustrates an embodiment of the 1 x 2 designs of figures 12a and 13b in which the switching or attenuating component is based on a 1 x 2 Mach-Zehnder Interferometer (MZI) **1708.** When used as a VOA, only one input and one output is used. Similarly, figure 17b illustrates an embodiment of the 2 x 2 designs of figures 12b and 13c in which the switching or attenuating component is based on a 2 x 2 Mach-Zehnder Interferometer **1734.** When used as a VOA, only one input and one output is used.

Although the present invention has been shown and described with respect to several preferred embodiments thereof, various changes, omissions and additions to the form and detail thereof, may be made therein, without departing from the spirit and scope of the invention.

## Claims

1. An optical device comprising:
an optical component having at least a first input port to receive at least a first optical signal;
at least a first bypass path, wherein a portion of the first bypass path is formed near the first input port to create a first coupler; and
wherein the first coupler is designed and fabricated to provide essentially 100% coupling of the first optical signal to the first bypass path in the absence of power such that the first bypass path routes the optical signal around the optical component to a known location.

2. The optical device according to claim 1, wherein:
the optical component has at least a first output port; and
wherein the first bypass path has a portion formed near the first output port to create a second coupler; and
wherein the second coupler is designed and fabricated to provide essentially 100% coupling of the first optical signal to the first output port in the absence of power such that the output port is the known location.

3. The optical device according to claim 2, wherein the optical component has a second input port to receive a second optical signal and a second output port, the device further comprising:
a second bypass path, wherein a portion of the second bypass path is formed near the second input port to create a third coupler and a portion of the second bypass path is formed near the second output port to form a fourth coupler;
wherein the third coupler is designed and fabricated to provide essentially 100% coupling of the second optical signal to the second bypass path in the absence of power such that the second bypass path routes the optical signal around the optical component to the fourth coupler; and
wherein the fourth coupler is designed and fabricated to provide essentially 100% coupling of the input optical signal to the second output port in the absence of power to the optical device.

4. The optical device according to claim 3, wherein the optical component is a switching component.

5. The optical device according to claim 3, wherein the optical component is a variable attenuating component.

6. The optical device according to claim 2, wherein the optical component is a switching component.

7. The optical device according to claim 2, wherein the optical component is a variable attenuating component.

8. The optical device according to claim 1, wherein the first bypass path outputs the first optical signal such that an output of the first bypass path is the known location.

9. The optical device according to claim 8, wherein the optical component has a second input port to receive a second optical signal, the device further comprising:
a second bypass path, wherein a portion of the second bypass path is formed near the second input port to create a second coupler;
wherein the second coupler is designed and fabricated to provide essentially 100% coupling of the second optical signal to the second bypass path in the absence of power to the optical device such that the second bypass path routes the optical signal around the optical component and outputs the second optical signal.

10. The optical device according to claim 9, wherein the optical component is a switching component.

11. The optical device according to claim 9, wherein the optical component is a variable attenuating component.

12. The optical device according to claim 8, wherein the optical component is a switching component.

13. The optical device according to claim 8, wherein the optical component is a variable attenuating component.

14. The optical device according to claim 1, wherein the optical component is a switching component.

15. The optical device according to claim 1, wherein the optical component is a variable attenuating component.

16. An optical device according to claim 1, wherein the first coupler is a directional coupler.

17. An optical device according to claim 16, wherein the directional coupler is designed such that there is a gap between the bypass path and first input port that has a width to height ratio of at least one.

18. An optical device according to claim 16, wherein the directional coupler is designed such that the bypass path and first input port merge as an essentially double-width waveguide in a coupling region.

19. An optical device comprising:
an interferometric switching component having at least a first input port to receive at least a first optical signal and first and second output ports, wherein the first optical signal is output to either the first output port or the second output port depending on the state of an actuation mechanism coupled to the switching component; and
wherein the switching component is designed and fabricated so that essentially 100% of the first optical signal is output the first output port in the absence of power to the actuation mechanism.

20. An optical device according to claim 19, wherein the interferometric switch is based on a directional coupler designed to have two waveguides separated by a gap, wherein the gap has a width to height ratio of at least one.

21. An optical device according to claim 19, wherein the interferometric switch is based on a directional coupler designed to have two waveguides that merge as an essentially double-width waveguide in a coupling region.

22. An optical device according to claim 19, wherein the interferometric switch is based on a Mach-Zehnder Interferometer designed to have coupling regions in which two waveguides are separated by a gap, wherein the gap has a width to height ratio of at least one.

23. An optical device according to claim 19, wherein the interferometric switch is based on a Mach-Zehnder Interferometer designed with coupling regions in which two waveguides merge as a double-width waveguide.

24. An optical device according to claim 19, wherein the interferometric switch is based on a multi-mode interference coupler designed such that a gap between the first and second output ports has a width to height ratio of at least two.

25. An optical device according to claim 19, wherein the interferometric switch is based on a Y-branch switch having a first arm connected between the first input port and the first output port and a second arm connected between the first input port and the second output port, wherein the Y-branch switch is designed such that an angle of the first arm with respect to the first input port is smaller than an angle of the second arm with respect to the first input port.

26. An optical device according to claim 19, wherein the interferometric switch is based on a Y-branch switch having a first arm connected between the first input port and the first output port and a second arm connected between the first input port and the second output port, wherein the Y-branch switch is designed such that a width of the first arm is smaller than a width of the second arm.

27. An optical device according to claim 19, wherein:
the interferometric switching component has a second input port to receive a second optical signal, wherein the second optical signal is output to either the first output port or the second output port depending on the state of the actuation mechanism; and
wherein the switching component is designed and fabricated so that essentially 100% of the second optical signal is output the second output port in the absence of power to the actuation mechanism.
